# DEMANDE DE BREVET EUROPEEN

(11) **EP 3 379 015 A1**
(43) Date de publication de la demande: **26.09.2018**
(21) Numéro de dépôt: 17186785.6
(22) Date de dépôt: 18.08.2017
(51) Int. Cl.: E05G 1/00, G05B 19/048, G07C 9/00

(54) **PROCÉDÉ ET SYSTÈME DE CONTRÔLE D'UN OBJET DESTINÉ À ÊTRE PARTAGÉ PAR PLUSIEURS UTILISATEURS POTENTIELS**

(30) Priorité: 21.03.2017 FR 1752301
(71) Demandeur: STMicroelectronics (Grand Ouest) SAS, 72100 Le Mans (FR)
(72) Inventeur: BOURGEAIS, Jérôme, 72000 Le Mans (FR); CATROUILLET, Michel, 72000 Le Mans (FR); ROMAIN, Jean Philippe, 72650 La Chapelle Saint Aubin (FR); CONSEIL, Laurent, 72230 Monce en Belin (FR)
(74) Mandataire: Casalonga

(57) **Abrégé**

Le procédé de contrôle d'au moins un objet (2) destiné à être partagé par plusieurs utilisateurs et destiné à être déposé dans au moins un habitacle (3), par exemple sécurisé, adapté à être dans un état ouvert (OS) ou dans un état fermé (CS). Le procédé comprenant
une détection de la présence ou de l'absence dudit au moins un objet (2) dans ledit au moins un habitacle (3) sécurisé à l'état fermé (CS) par l'intermédiaire d'une première liaison sans fil entre l'objet (2) et un lecteur (6) situé dans l'habitacle (3), ladite première liaison sans fil restant confinée dans l'habitacle (3) à l'état fermé (CS), et
une transmission d'une première information (S1) représentative de la présence ou de l'absence dudit au moins un objet (2) dans ledit habitacle (3) vers au moins un serveur informatique (4) accessible via un site internet (5) destiné à être géré par un administrateur, via un réseau internet et une deuxième liaison entre ledit au moins un habitacle (3) et ledit réseau internet.

## Description

Des modes de mise en oeuvre et de réalisation de l'invention concernent l'internet des objets, communément connu de l'homme du métier sous l'acronyme anglosaxon IoT (« Internet of Things » en anglais), et plus particulièrement les systèmes contenant un ou plusieurs objets connectés au réseau d'internet et destinés à être partagés par plusieurs utilisateurs potentiels en toute sécurité, et permettant un contrôle à distance du ou de ces objets, ici par exemple un contrôle de leur emplacement et/ou de leur accès par ces utilisateurs.

Durant ces dernières années, l'économie collaborative, notamment sous forme de l'économie du partage, née de la rencontre de l'innovation numérique et sociale, se développe rapidement dans le monde entier et commence à changer les modes de vie d'un grand nombre de personnes.

Avec des services accessibles via des sites internet dédiés, on peut partager notamment entre des particuliers, des logements, des bureaux, des voitures, des bateaux, des produits d'occasion, etc.

Dans la plupart des cas, ce genre de partage nécessite une rencontre physique entre au moins un tiers, par exemple le propriétaire de l'objet ou du représentant et au moins un utilisateur d'au moins un objet à partager, par exemple pour la remise d'une clé de logement ou de voiture en mains propres.

Dans d'autres cas, des propriétaires et des locataires de ce genre de partage peuvent utiliser, par exemple un coffre-fort classique accessible par mot de passe, pour transmettre des clés ou des objets de grande valeur à partager.

Il existe ainsi un besoin de proposer un système d'objets à partager permettant d'effectuer à distance un contrôle d'accès respectif pour chaque utilisateur, une vérification à distance de la présence ou de l'absence des clés ou des objets à partager dans un endroit prédéterminé, et un suivi consultable à distance des accès effectifs de chaque utilisateur à ces objets et de différents paramètres du système.

Un coffre-fort classique ne permet pas à un administrateur de générer un mot de passe dédié à chaque utilisateur sans intervention physique sur le coffre-fort à l'issue de chaque utilisation, d'autoriser des plages horaires données, et de connaître quel utilisateur a eu l'accès audit coffre-fort et le moment exact de l'accès.

Selon un aspect, il est proposé un procédé de contrôle d'au moins un objet destiné à être partagé par plusieurs utilisateurs et destiné à être déposé dans au moins un habitacle, en particulier sécurisé, par exemple un coffre-fort, adapté à être dans un état ouvert ou dans un état fermé. Le procédé comprend
une détection de la présence ou de l'absence dudit au moins un objet dans ledit au moins un habitacle à l'état fermé par l'intermédiaire d'une première liaison sans fil, par exemple une liaison courte portée, en particulier du type « Bluetooth », entre l'objet et un lecteur situé dans l'habitacle, ladite première liaison sans fil restant confinée dans l'habitacle à l'état fermé, par exemple en utilisant un habitacle métallique, et
une transmission, via un réseau internet et une deuxième liaison, par exemple une liaison longue portée, en particulier sans fil ou Ethernet, entre ledit au moins un habitacle et ledit réseau internet, d'une première information représentative de la présence ou de l'absence dudit au moins un objet dans ledit habitacle vers au moins un serveur informatique accessible via un site internet destiné à être géré par un administrateur.

Le procédé peut par exemple comprendre en outre une gestion du contrôle d'accès dudit au moins un habitacle à partir du site internet via le réseau internet et la deuxième liaison.

Un tel procédé permet avantageusement une gestion centralisée du contrôle d'accès dudit au moins un habitacle via un site internet et un suivi à distance de l'état de la présence ou de l'absence dudit au moins un objet à partager, ce qui permet de proposer un horodatage de chaque prise ou remise de l'objet.

A titre d'exemple non limitatif, la gestion du contrôle d'accès peut être en outre effectuée via un troisième canal, par exemple une liaison téléphonique, une liaison internet mobile, une voie postale, ou autre mis en place entre l'administrateur et l'utilisateur effectif de l'objet partagé.

Selon un mode de mise en oeuvre, la gestion du contrôle d'accès comprend
une génération d'un code d'ouverture de référence de l'habitacle,
une transmission du code de référence audit utilisateur effectif par l'administrateur via ledit troisième canal, par exemple par transmission de texto (« Short Message Service » : SMS en anglais), de courriel, de télécopie, de courriers, ou une conversation au cours d'un appel téléphonique,
une saisie d'un code d'ouverture sur une interface de saisie couplée audit habitacle,
une transmission du code d'ouverture saisi vers le serveur informatique via ladite deuxième liaison et le réseau internet,
une étape de comparaison comportant une comparaison entre le code d'ouverture de référence transmis et le code d'ouverture saisi reçu par le serveur informatique de façon à obtenir une autorisation ou un refus d'ouverture dudit au moins un habitacle en fonction du résultat de la comparaison, et
une transmission d'une deuxième information représentative de l'autorisation ou du refus à l'habitacle via le réseau internet et la deuxième liaison.

De ce fait, toute la gestion du contrôle d'accès est effectuée à partir du serveur informatique via le site internet et l'administrateur du système peut générer un code d'ouverture de référence dédié pour chaque utilisateur. Par ailleurs, la durée de validité de chaque code d'ouverture de référence peut être également gérée par l'administrateur.

Le code d'ouverture de référence peut être par exemple choisi dans le groupe formé par : un mot de passe, un code d'authentification Bluetooth, un code d'identification NFC (« Near Field Communication » : NFC en anglais) (« communication en champ proche »), un code-barres et un code QR (« Quick Response » en anglais).

Selon un autre mode de mise en oeuvre, la gestion du contrôle d'accès comprend une reconnaissance d'au moins une caractéristique corporelle de l'utilisateur effectif de l'objet.

Avantageusement, une telle gestion du contrôle permet d'offrir un niveau de sécurité plus élevé pour un système plus exigeant.

Selon cet autre mode de mise en oeuvre, la gestion du contrôle d'accès comporte
un pré-enregistrement d'au moins une caractéristique corporelle de référence dans ledit au moins un serveur informatique via le site internet,
un recueil d'au moins une caractéristique corporelle sur une interface de recueil couplée audit habitacle,
une transmission de ladite au moins une caractéristique corporelle recueillie vers ledit au moins un serveur informatique via ladite deuxième liaison et le réseau internet,
une étape de comparaison comportant une comparaison entre ladite au moins une caractéristique corporelle de référence et ladite au moins une caractéristique corporelle recueillie reçue de façon à obtenir une autorisation ou un refus d'ouverture dudit au moins un habitacle en fonction du résultat de la comparaison, et
une transmission d'une deuxième information représentative de l'autorisation ou du refus à l'habitacle via le réseau internet et la deuxième liaison.

A titre indicatif mais non limitatif, ladite au moins une caractéristique corporelle de référence peut par exemple comprendre au moins une caractéristique corporelle choisie dans le groupe formé par : la voix, le visage, une empreinte digitale et une empreinte de l'iris.

Selon encore un autre mode de mise en oeuvre, la gestion du contrôle d'accès comprend en outre une détection de l'état ouvert ou fermé dudit au moins un habitacle et une transmission d'une troisième information représentative de l'état ouvert ou fermé à l'issue de chaque changement de l'état ouvert ou fermé de l'habitacle vers le serveur informatique via la deuxième liaison et le réseau internet.

Par conséquent, l'administrateur du système peut avantageusement suivre l'état ouvert ou fermé de l'habitacle à distance à tout moment. Ladite détection de la présence ou de l'absence dudit au moins un objet est effectuée lorsque l'état fermé de l'habitacle est détecté de façon à assurer que la détection s'effectue bien au sein de l'habitacle.

Le procédé peut par exemple comprendre en outre une détection d'au moins un paramètre physique dudit au moins un habitacle et une transmission d'une quatrième information représentative dudit au moins un paramètre physique à l'issue de chaque changement dudit au moins un paramètre physique, vers le serveur informatique via la deuxième liaison et le réseau internet.

Un tel procédé permet à l'administrateur de suivre les différents paramètres physiques de l'habitacle à distance. En cas de problème sur l'habitacle, l'administrateur peut être notifié par le serveur informatique.

Selon un mode de mise en oeuvre, ledit au moins un paramètre physique est choisi dans le groupe formé par : la température, la position, l'humidité, l'accélération, et, lorsque ledit au moins un habitacle comporte au moins une batterie, le niveau de charge de ladite au moins une batterie.

Selon un mode de mise en oeuvre, la détection de la présence ou de l'absence d'au moins un objet partagé comprend en outre une prise de photo du contenu interne dudit au moins un habitacle à l'état fermé et une transmission de la photo vers le serveur informatique.

L'administrateur du système peut avantageusement obtenir une preuve visuelle consultable à distance sur la présence ou l'absence dudit au moins un objet à l'aide de cette prise de photo du contenu interne de l'habitacle.

Selon un mode de mise en oeuvre, la première liaison est basée sur une technologie choisie dans le groupe formé par les technologies : Bluetooth Smart, NFC, IEEE 802.15.1, et radio-identification (« Radio Frequency Identification » : RFID en anglais), et la deuxième liaison est basée sur une technologie choisie dans le groupe formé par les technologies : réseau étendu à longue portée (« Long Range Wide Area Network » : LoRaWAN ou LoRa en anglais), SigFox, WiFi (IEEE 802.11, « Wireless Fidelity » en anglais), et Ethernet.

Il convient de noter qu'il est préférable d'établir la première liaison basée sur la technologie Bluetooth Smart en raison de la faible consommation et la deuxième liaison basée sur la technologie LoRa ou SigFox en raison de la portée nationale et de la faible consommation.

Selon un autre aspect, il est proposé un système. Ce système comprend
au moins un habitacle, par exemple sécurisé, adapté à être dans un état ouvert ou dans un état fermé,
au moins un objet destiné à être partagé par plusieurs utilisateurs et destiné à être déposé dans ledit au moins un habitacle, et
au moins un serveur informatique accessible via un site internet destiné à être géré par un administrateur,
ledit au moins un habitacle comportant
un lecteur configuré pour établir une première liaison sans fil entre ledit au moins un objet et le lecteur, ledit au moins un objet étant équipé d'un module capable de coopérer avec le lecteur via ladite première liaison sans fil, l'habitacle étant configuré de sorte que la première liaison reste confinée dans l'habitacle à l'état fermé,
des moyens de communication configurés pour établir une deuxième liaison entre l'habitacle et un réseau internet,
des moyens de traitement configurés pour détecter la présence ou l'absence de l'objet dans l'habitacle à l'état fermé par l'intermédiaire de la première liaison, transmettre une première information représentative de ladite présence ou de ladite absence vers le serveur informatique via le réseau internet et la deuxième liaison.

Le serveur peut par exemple être en outre configuré pour gérer le contrôle d'accès dudit au moins un habitacle à partir du site internet via le réseau internet et la deuxième liaison.

A titre d'exemple non limitatif, le serveur peut être en outre configuré pour gérer le contrôle d'accès via un troisième canal mis en place entre l'administrateur et l'utilisateur effectif de l'objet partagé.

Selon un mode de réalisation, le serveur est configuré pour générer un code d'ouverture de référence de l'habitacle et pour transmettre le code de référence audit utilisateur effectif via ledit troisième canal,

l'habitacle comporte une interface de saisie configurée pour recevoir une saisie d'un code d'ouverture,
les moyens de traitement sont configurés pour transmettre le code d'ouverture saisi vers le serveur informatique via ladite deuxième liaison et le réseau internet,
le serveur est en outre configuré pour effectuer une étape de comparaison comportant une comparaison entre le code de référence transmis et le code d'ouverture saisi reçu de façon à obtenir une autorisation ou un refus d'ouverture dudit au moins un habitacle en fonction du résultat de la comparaison, et une transmission d'une deuxième information représentative de l'autorisation ou du refus à l'habitacle via le réseau internet et la deuxième liaison.

A titre d'exemple non limitatif, le code d'ouverture de référence peut par exemple être choisi dans le groupe formé par : un mot de passe, un code d'authentification Bluetooth, un code d'identification NFC, un code-barres et un code QR.

Selon un autre mode de réalisation, le serveur informatique est en outre configuré pour gérer le contrôle d'accès dudit au moins un habitacle via une reconnaissance d'au moins une caractéristique corporelle d'un utilisateur effectif.

Selon cet autre mode de réalisation, le serveur informatique est configuré pour préenregistrer dans une mémoire au moins une caractéristique corporelle de référence via le site internet,

l'habitacle comporte en outre une interface de recueil configurée pour recueillir ladite au moins une caractéristique corporelle,
les moyens de traitement sont configurés pour transmettre ladite au moins une caractéristique corporelle recueillie vers le serveur via ladite deuxième liaison et le réseau internet, et
le serveur est en outre configuré pour effectuer une étape de comparaison comportant une comparaison entre ladite au moins une caractéristique corporelle de référence et ladite au moins une caractéristique corporelle recueillie reçue de façon à obtenir une autorisation ou un refus d'ouverture dudit au moins un habitacle en fonction du résultat de la comparaison, et une transmission d'une deuxième information représentative de l'autorisation ou du refus à l'habitacle via le réseau internet et la deuxième liaison.

Ladite au moins une caractéristique corporelle de référence peut par exemple comprendre au moins une caractéristique corporelle choisie dans le groupe formé par : la voix, le visage, une empreinte digitale et une empreinte de l'iris.

A titre indicatif mais non limitatif, ledit au moins un habitacle comporte en outre des moyens de détection supplémentaires, configurés pour déterminer l'état ouvert ou fermé de l'habitacle et les moyens de traitement sont en outre configurés pour transmettre une troisième information représentative de l'état ouvert ou fermé à l'issue de chaque changement de l'état ouvert ou fermé de l'habitacle vers le serveur informatique via la deuxième liaison et le réseau internet.

Selon un mode de réalisation, ledit au moins un paramètre physique est choisi dans le groupe formé par : la température, la position, l'humidité, l'accélération, et, lorsque ledit au moins un habitacle comporte au moins une batterie, le niveau de charge de ladite au moins une batterie.

Selon un mode de réalisation, ledit au moins un habitacle comporte un appareil de prise de vue configuré pour prendre au moins une photo du contenu interne dudit au moins un habitacle à l'état fermé de façon à détecter la présence ou l'absence d'au moins un objet et les moyens de traitement sont configurés pour transmettre au serveur informatique ladite au moins une photo prise.

Selon un mode de réalisation, le lecteur est compatible avec une technologie choisie dans le groupe formé par les technologies : Bluetooth Smart, NFC, IEEE 802.15.1, et RFID, et les moyens de communication sont compatibles avec une technologie choisie dans le groupe formé par les technologies : LoRa, SigFox, WiFi, et Ethernet.

A titre d'exemple non limitatif, ledit au moins un habitacle peut par exemple comporter un coffre-fort métallique.

Il convient de noter qu'un tel coffre-fort métallique permet avantageusement d'assurer que la première liaison sans fil reste confinée dans l'habitacle à l'état fermé.

Selon un autre aspect, il est proposé un microcontrôleur incorporant les moyens de traitement du système tel que défini ci-avant, par exemple le microcontrôleur commercialisé par la société ST Microelectronics sous la référence STM32.

Selon encore un autre aspect, il est proposé un circuit intégré incorporant le lecteur, par exemple compatible avec la technologie Bluetooth Smart, du système tel que défini ci-avant, par exemple la carte d'extension commercialisée par la société STMicroelectronics sous la référence X-NUCLEO-IDB05A1.

Selon toujours un autre aspect, il est proposé un circuit intégré incorporant les moyens de communication du système tel que défini ci-avant, par exemple le récepteur/émetteur à longue portée compatible avec la technologie LoRa commercialisé par la société SEMTECH sous la référence SX1272 LoRa.

D'autres avantages et caractéristiques de l'invention apparaîtront à l'examen de la description détaillée de modes de mise en oeuvre et de réalisation, nullement limitatifs, et des dessins annexés sur lesquels :

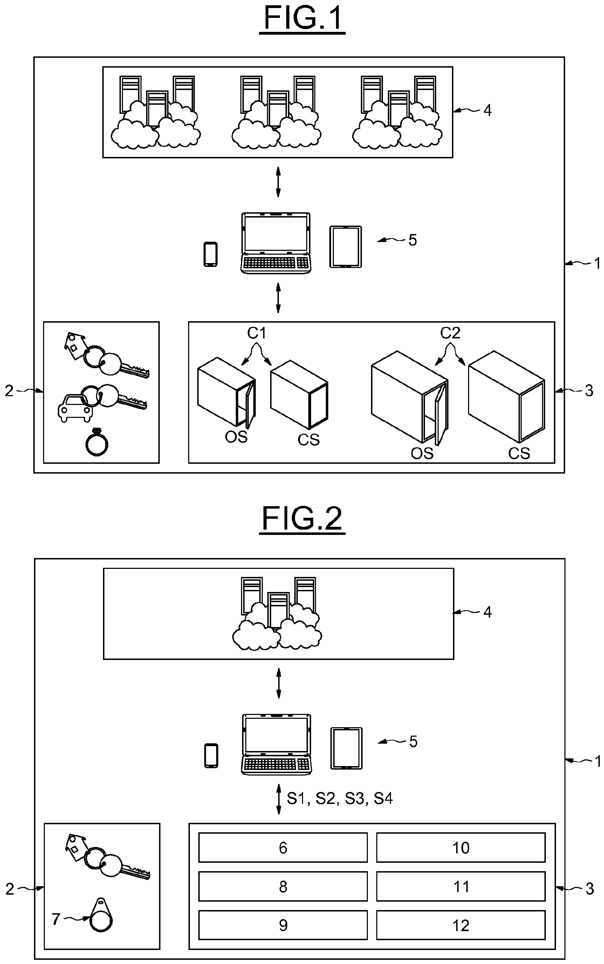

- les figures 1 à 5 illustrent schématiquement des modes de mise en oeuvre et de réalisation de l'invention.

La figure 1 illustre schématiquement un exemple d'un système 1 selon l'invention, conçu pour stocker au moins un objet 2 destiné à être partagé par plusieurs utilisateurs, tel qu'une clé de logement, une clé de voiture, ou un bijou de grande valeur, et accorder à un utilisateur effectif l'accès à chaque objet 2 à partager sous contrôle d'accès.

Ledit système 1 comprend
au moins un habitacle, ici un habitacle sécurisé 3, par exemple au moins un coffre-fort métallique C1 et C2, comportant chacun un état ouvert OS et un état fermé CS,
chaque objet 2, ici par exemple au moins une clé 2 de logement en location, destiné à être partagé par des utilisateurs, ici par exemple par des locataires de logement, et destiné à être déposé dans ledit au moins un coffre-fort 3, et
au moins un serveur informatique 4, ici par exemple un serveur de services informatiques en nuage (« Cloud Computing » en anglais), accessible via un site internet 5 et destiné à être géré par un administrateur, ici par exemple un propriétaire d'un logement destiné à être mise en location.

Il convient de noter que chaque habitacle C1 et C2 peut avoir une taille différente de façon à stocker un objet 2 à partager ayant une taille adaptée pour cet habitacle et que chaque serveur informatique 4 peut être également accessible via un logiciel applicatif 5 (site internet) développé par exemple pour un appareil électronique mobile tel qu'un téléphone portable intelligent (« Smart Phone » en anglais) ou une tablette numérique.

Tous les contrôles d'accès de chaque coffre-fort 3 sont avantageusement effectués par le serveur informatique 4 via le site internet 5 en utilisant des protocoles de sécurité connus en soi.

En conséquence, l'administrateur du système peut suivre à distance la présence ou l'absence dudit au moins une clé 2 et l'état ouvert ou fermé de chaque coffre-fort 3 via le site internet 5 sans être obligé de rencontrer physiquement les utilisateurs.

On se réfère maintenant à la figure 2 pour illustrer plus en détails un exemple de la structure du système 1 selon un mode de réalisation.

A des fins de simplification, le système 1 illustré sur la figure 2 comporte seulement, à titre d'exemple non limitatif, un coffre-fort métallique 3, une clé 2 de logement destinée à être partagée par des utilisateurs et à être déposée au sein du coffre-fort 3, et un serveur 4 de services informatiques en nuage gérable à distance par un administrateur du système 1 via un site internet 5 associé.

Plus précisément, le coffre-fort 3 comporte un lecteur 6 configuré pour établir, entre la clé 2 et le lecteur 6, une première liaison sans fil, ici par exemple une liaison sans fil à courte portée basée sur la technologie de communication sans fil conforme à la norme « Bluetooth » version 4.0 et ultérieure, communément connue de l'homme du métier sous la dénomination anglo-saxonne « Bluetooth SMART » ou « Bluetooth Low Energy ». A titre indicatif mais non limitatif, le lecteur 6 du système 1 est incorporé dans un circuit intégré dédié, par exemple la carte d'extension commercialisée par la société STMicroelectronics sous la référence X-NUCLEO-IDB05A1

Afin d'établir la première liaison, la clé est équipée d'un module 7, ici par exemple une étiquette 7 compatible avec la technologie « Bluetooth SMART ». La consommation énergétique de cette étiquette 7 et du lecteur 6 est avantageusement très faible grâce à l'utilisation de cette technologie « Bluetooth SMART ».

Il convient de noter qu'on peut bien utiliser d'autres technologies telles que la communication en champ proche (« Near Field Communication » : NFC en anglais), celle compatible avec la norme IEEE 802.15.1, et celle du type radio-identification («Radio Frequency Identification » : RFID en anglais) pour établir la première liaison.

Par ailleurs, les parois du coffre-fort 3 sont métalliques, ce qui permet, à l'état fermé CS du coffre-fort 3, de confiner complètement la première liaison sans fil dans le coffre-fort 3.

Ainsi, si le coffre-fort 3 est fermé, on ne peut pas détecter un objet qui serait retiré par erreur ou frauduleusement à l'extérieur du coffre-fort 3.

Le coffre-fort 3 comporte également des moyens de communication 8 configurés pour établir une deuxième liaison entre le coffre-fort et un réseau internet.

La deuxième liaison est, de préférence, basée sur une technologie de communication à longue portée, ici par exemple LoRa ou SigFox, de façon à obtenir moins de contraintes sur la position du coffre-fort 3 car le réseau LoRa ou SigFox permet avantageusement une grande couverture nationale ainsi qu'une faible consommation énergétique. Lorsque le coffre-fort 3 est placé dans un endroit proche dans un bâtiment ou au sous-sol d'un bâtiment, la deuxième liaison peut être basée sur une technologie de communication classique comme WiFi ou Ethernet.

Bien entendu dans le cas où la deuxième liaison est basée sur une technologie de communication sans fil, les moyens de communication 8 peuvent comporter en outre une antenne de communication située à l'extérieure du coffre-fort 3.

Il convient de noter que la deuxième liaison n'est établie que lorsque c'est nécessaire de façon à réduire la consommation énergétique globale du système 1. Grâce à cette caractéristique de faible consommation et l'utilisation de la technologie basée sur « Bluetooth SMART », le coffre-fort 3 peut par exemple être alimenté par une batterie, par un secteur électrique ou juste par un câble Ethernet branché à un réseau internet.

Avantageusement, le fait que le coffre-fort 3 puisse être alimenté par une batterie permet une installation du coffre-fort dans un endroit loin d'une infrastructure électrique.

A titre d'exemple, les moyens de communication 8 du système 1 sont incorporés dans un circuit intégré dédié, par exemple le récepteur/émetteur à longue portée compatible avec la technologie LoRa commercialisé par la société SEMTECH sous la référence SX1272 LoRa.

Le coffre-fort 3 comporte en outre des moyens de détection supplémentaires 9, par exemple un capteur d'ouverture et de fermeture de porte, configurés pour détecter l'état ouvert OS ou l'état fermé CS du coffre-fort 3, et des moyens de traitement 10, ici par exemple un microcontrôleur du type STM32 commercialisé par la société STMicroelectronics. Les moyens de traitement 10 sont configurés pour effectuer la détection de la présence ou l'absence de la clé 2 dans le coffre-fort 3 via la première liaison lorsque l'état fermé est détecté par les moyens de détection supplémentaires 9 et transmettre au serveur 4 un premier signal S1 représentatif de la présence ou de l'absence de la clé 2 dans le coffre-fort 3.

Bien que cela ne soit pas indispensable, le coffre-fort 3 peut comporter en outre au moins un capteur, ici par exemple un capteur 11, configuré pour détecter au moins un paramètre physique du coffre-fort 3, par exemple la température, la position, l'humidité, l'accélération, et lorsque le coffre-fort 3 comporte au moins une batterie, le niveau de charge de chaque batterie.

Ces paramètres physiques du coffre-fort 3 sont notamment utiles pour l'administrateur afin de suivre quantitativement des états physiques du coffre-fort 3 et de détecter éventuellement un acte malveillant à l'encontre du coffre-fort 3. Les moyens de traitement 10 sont en outre configurés pour émettre vers le serveur 4 un quatrième signal S4 représentatif de chaque paramètre physique. L'administrateur peut consulter à distance le quatrième signal S4 à tout moment et recevoir une notification voire une alerte délivrée par le serveur 4 dès qu'une anomalie sur chaque paramètre physique est détectée.

A titre d'exemple, la détection d'une accélération brutale du coffre-fort 3 peut provoquer une émission d'une alerte relative à une tentative de déplacer le coffre-fort 3.

Le coffre-fort 3 comporte par ailleurs une interface de saisie 12, par exemple un clavier de saisie et un écran d'affichage, située par exemple sur une surface frontale du coffre-fort 3 et configurée pour recevoir un code d'ouverture saisi par un utilisateur via le clavier de saisie.

Il convient de noter que les moyens de traitement 10 sont avantageusement configurés pour n'activer le lecteur 6 et les moyens de communication 8 que lorsque c'est nécessaire, c'est-à-dire lors d'échanges de données avec le serveur informatique 4 de façon à encore diminuer la consommation énergétique globale du système 1.

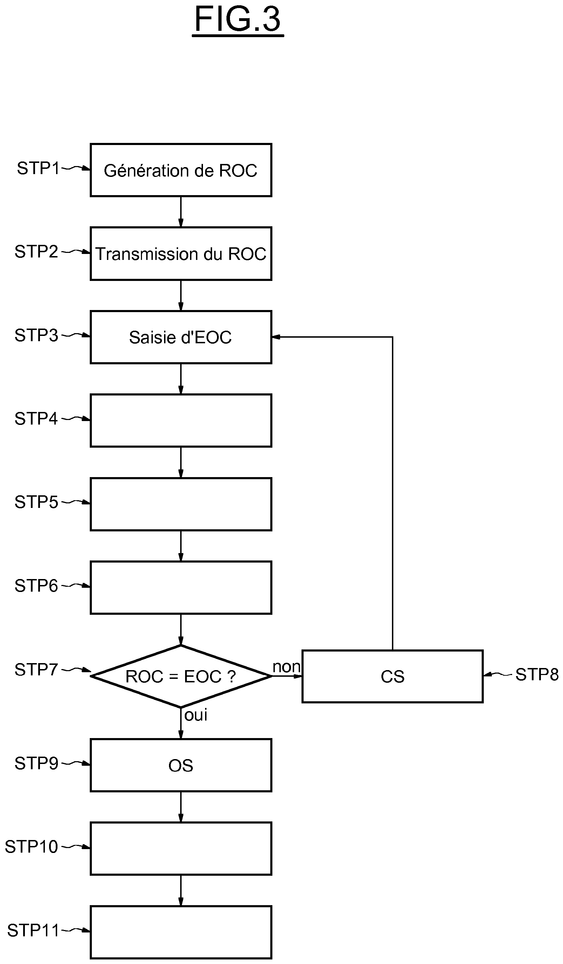

On se réfère maintenant à la figure 3 pour illustrer un procédé de contrôle de la clé 2 avec le système 1 illustré sur la figure 2.

Dans un cas de figure où un locataire demanderait au propriétaire de lui donner la clé 2 d'un logement en location afin d'avoir l'accès à ce logement, le propriétaire peut déposer préalablement la clé 2 dans le coffre-fort 3 et effectuer une gestion de contrôle d'accès du coffre-fort 3 via le site internet 5.

Dans une première étape STP1, un code d'ouverture de référence ROC dédié à cet utilisateur est généré par le serveur informatique 4 à la demande du propriétaire. Autrement dit, chaque utilisateur, ici chaque locataire, peut recevoir son propre code d'ouverture de référence ROC, éventuellement avec une durée de validité préconfigurée par le propriétaire via le serveur informatique 4.

Le code d'ouverture de référence ROC peut par exemple être choisi dans le groupe formé par : un mot de passe, un code d'authentification Bluetooth, un code d'identification NFC, un code-barres et un code QR (« Quick Response » en anglais).

Ce code d'ouverture de référence ROC est ensuite transmis vers l'utilisateur par exemple via un troisième canal, ici par exemple un texto (« Short Message Service » : SMS en anglais) ou un courriel (STP2).

Une fois arrivé à proximité du coffre-fort 3, l'utilisateur peut saisir un code d'ouverture EOC sur l'interface de saisie 12 du coffre-fort 3 dans une troisième étape STP3. Les moyens de traitement 10 sont configurés pour transmettre le code d'ouverture saisi EOC par l'utilisateur vers le serveur informatique 4 (STP4) via la deuxième liaison et le réseau internet.

Le serveur 4 est ensuite configuré pour effectuer une cinquième étape STP5 de comparaison comportant une comparaison entre le code d'ouverture de référence ROC transmis à l'utilisateur et le code d'ouverture saisi EOC par l'utilisateur et reçu par le serveur informatique 4.

Dans le cas où le code d'ouverture saisi EOC est le même que celui de référence ROC, le serveur 4 est configuré pour autoriser l'accès au coffre-fort 3. Dans le cas contraire, l'accès au coffre-fort 3 est refusé par le serveur 4 (STP6).

Dans une septième étape STP7, un deuxième signal S2 représentatif de l'autorisation ou du refus est délivré par le serveur 4 vers le coffre-fort 3 de façon à accorder l'accès au coffre-fort 3 ou à afficher un message de code faux sur l'interface de saisie 12.

Par ailleurs, toutes les tentatives de l'accès au coffre-fort 3 sont enregistrées sur le serveur 4 et sont consultables via le site internet 5. Le propriétaire peut par exemple être notifié via un texto (« SMS » en anglais) ou un courriel après trois tentatives ratées à l'accès du coffre-fort 3.

Il convient de noter que toutes les communications entre le coffre-fort 3 et le serveur 4 sont sécurisées avec des protocoles de sécurités classiques connus en soi. L'accès de l'administrateur sur le serveur 4 est par exemple protégé par un mot de passe classique ou un mot de passe dynamique associé à un téléphone portable du propriétaire.

Dans le cas où l'utilisateur a saisi incorrectement le code d'ouverture de référence ROC, la demande de l'accès au coffre-fort 3 est refusée par le serveur 4 et le coffre-fort 3 reste dans l'état fermé CS (STP8). L'utilisateur est alors invité à saisir à nouveau un nouveau code d'ouverture (STP3).

Dans le cas contraire, le coffre-fort 3 va passer à l'état ouvert OS à la suite de la réception du deuxième signal S2 représentatif de l'autorisation (STP9). Les moyens de traitement 10 émettent un troisième signal S3 représentatif de l'état ouvert OS ou fermé CS du coffre-fort 3 vers le serveur 4 de façon à signaler chaque changement de cet état ouvert OS ou fermé CS.

L'utilisateur peut ensuite récupérer la clé 2 avec son étiquette 7 et refermer la porte du coffre-fort 3 de façon à rendre à nouveau le coffre-fort 3 dans l'état fermé CS (STP10). Comme la clé 2 avec son étiquette 7 est maintenant en dehors du coffre-fort 3, la première liaison ne peut plus être établie entre la clé 2 avec son étiquette 7 et le coffre-fort 3 parce que la première liaison sans fil reste confinée dans le coffre-fort 3 à l'état fermé CS.

Dans ce cas là, le premier signal S1 représentatif de l'absence de la clé 3 est émis par les moyens de traitement 10 vers le serveur 4 via la deuxième liaison et le réseau internet et le troisième signal S3 représentatif de l'état fermé CS est également émis vers le serveur 4 afin de mettre à jour cet état ouvert OC ou fermé CS du coffre-fort 3 consultable sur le site internet 5 (STP11).

S'il y a plusieurs clés ou objets à partager dans le coffre-fort 3, chaque clé ou objet est identifié via la première liaison parce que chaque étiquette possède un numéro d'identité unique. L'administrateur peut donc suivre la présence ou l'absence de chaque clé ou objet à partager.

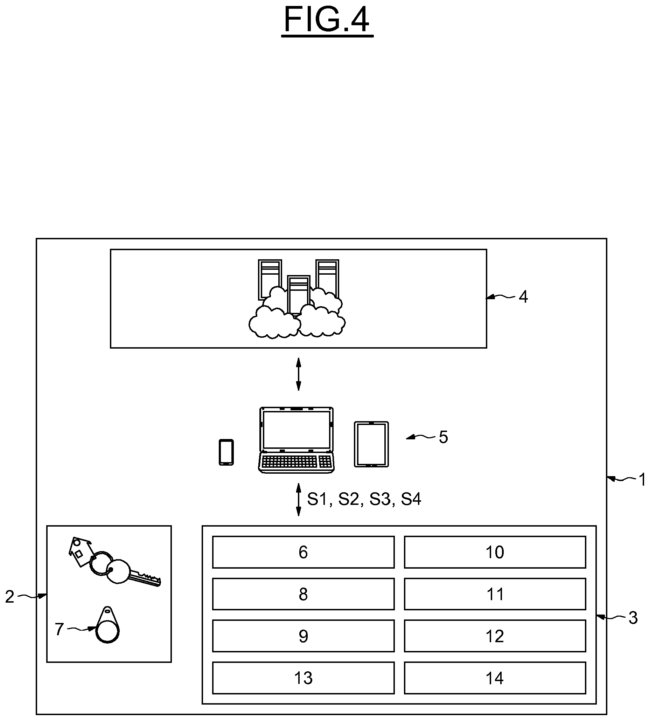

En variante, pour répondre à certains niveaux de sécurité exigeants, le coffre-fort 3 peut comporter une interface de recueil 13 à la place ou en supplément de l'interface de saisie 12, et un appareil de prise de vue 14, par exemple une caméra (figure 4).

L'interface de recueil 13 est configurée pour recueillir au moins une caractéristique corporelle de l'utilisateur. A titre indicatif mais non limitatif, chaque caractéristique corporelle peut être la voix, le visage, une empreinte digitale ou une empreinte de l'iris de l'utilisateur.

Cette interface de recueil 13 est disposée par exemple sur une face de l'habitacle 3 ou est couplée à cet habitacle 3. Sa structure est adaptée au type de caractéristique corporelle recueillie.

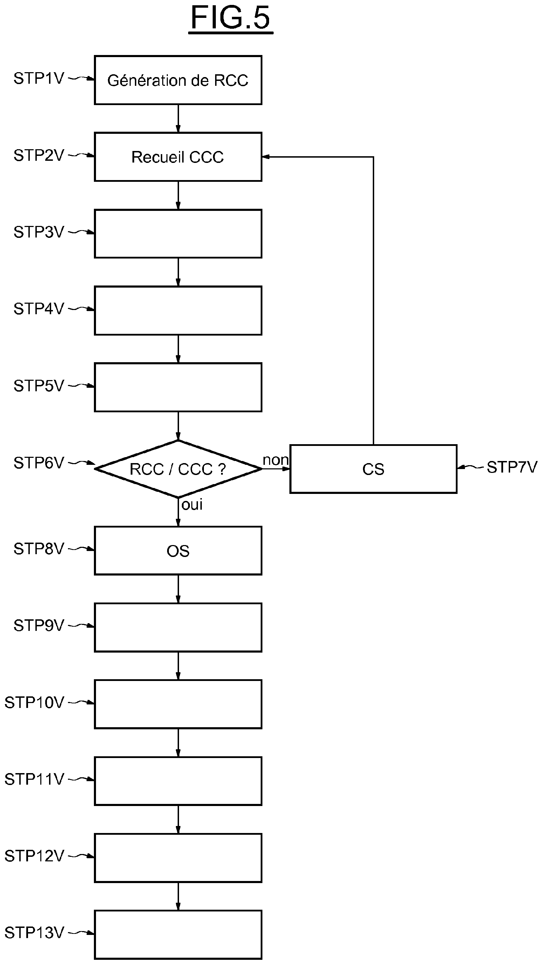

En se référant à la figure 5, on va maintenant décrire un procédé de contrôle de la clé 2 avec le système 1 selon la variante illustrée sur la figure 4.

Selon cette variante et le procédé de contrôle associé, des utilisateurs potentiels du système 1 sont invités à préenregistrer leur au moins une caractéristique corporelle de référence RCC dans une mémoire du serveur informatique 4 (STP1V).

Comme chaque utilisateur portant sa propre caractéristique corporelle de référence RCC, une transmission de la caractéristique corporelle de référence RCC du serveur 4 vers l'utilisateur n'est donc pas nécessaire.

Lorsqu'un utilisateur arrive près du coffre-fort 3, au moins une caractéristique corporelle CCC de l'utilisateur peut être recueillie via l'interface de recueil 13 (STP2V).

Les moyens de traitement 10 sont ensuite configurés pour transmettre vers le serveur 4 chaque caractéristique corporelle recueillie CCC via la deuxième liaison et le réseau internet (STP3V).

Une étape de comparaison comportant une comparaison entre chaque caractéristique corporelle de référence RCC préenregistrée et chaque caractéristique corporelle recueillie CCC reçue est effectuée par le serveur 4 (STP4V).

Le serveur 4 est en outre configuré pour déterminer une autorisation ou un refus d'ouverture du coffre-fort 3 en fonction du résultat de la comparaison (STP5V).

Le deuxième signal S2 représentatif de l'autorisation ou du refus est ensuite délivré par le serveur 4 vers le coffre-fort 3 via la deuxième liaison et le réseau internet (STP6V).

Si la reconnaissance de chaque caractéristique corporelle n'est pas réussie au serveur 4, l'accès au coffre-fort 3 est donc refusé et le coffre-fort 3 reste dans l'état fermé CS (STP7V). L'utilisateur est alors invité à recommencer l'étape de recueil (STP2V) de chaque caractéristique corporelle.

Dans le cas contraire, le serveur 4 autorise l'accès au coffre-fort 3 et le coffre-fort 3 passe à l'état ouvert OS à la suite de la réception du deuxième signal S2 représentatif de l'autorisation (STP8V). Les moyens de traitement 10 émettent un troisième signal S3 représentatif de l'état ouvert OS ou fermé CS du coffre-fort 3 vers le serveur 4 de façon à signaler chaque changement de cet état ouvert OS ou fermé CS.

L'utilisateur peut ensuite récupérer la clé 2 avec son étiquette 7 et refermer la porte du coffre-fort 3 de façon à replacer à nouveau le coffre-fort 3 dans l'état fermé CS (STP9V).

L'appareil de prise de vue 14 est ensuite configuré pour prendre une photo du contenu interne du coffre-fort 3 à la suite de la fermeture de la porte du coffre-fort 3 (STP10V).

En effet, cet appareil de prise de vue 14 est destiné à fournir à distance une vue réelle du contenu interne du coffre-fort 3 dans un cas où l'utilisateur a pris ou a restitué l'étiquette 7 de la clé 3 sans la clé 3. En d'autres termes, l'étiquette 7 a été retirée de la clé 3.

Les moyens de traitement 10 sont en outre configurés pour transmettre cette photo du contenu interne vers le serveur 4 via la deuxième liaison et le réseau internet, de façon à permettre à l'administrateur de visualiser cette photo et revérifier à distance la présence ou l'absence de la clé 2 (STP11V).

Dans le cas de l'absence de la clé 2 et de l'étiquette 7, le premier signal S1 représentatif de l'absence de la clé 3 est émis par les moyens de traitement 10 vers le serveur 4 via la deuxième liaison et le réseau internet, et le troisième signal S3 représentatif de l'état fermé CS est également émis vers le serveur 4 afin de mettre à jour cet état ouvert OC ou fermé CS du coffre-fort 3 consultable sur le site internet 5 (STP12V).

Dans le cas de la présence ou de l'absence incomplète de la clé 2 selon la photo prise par l'appareil de prise de vue 14, l'administrateur est invité à contacter directement le dernier utilisateur qui a eu l'accès au coffre-fort (STP13V). Comme l'utilisateur et le moment de chaque accès sont enregistrés et consultables sur le serveur informatique 4, l'administrateur peut facilement identifier ce dernier utilisateur.

Avantageusement, dans des cas d'erreurs incluant non limitativement les cas suivants : porte du coffre-fort 3 non fermée, code d'ouverture saisi incomplet, étiquette inconnue présentée dans le coffre-fort 3, les moyens de traitement 10 sont en outre configurés pour transmettre au serveur 4 ces informations d'erreurs via la deuxième liaison et le réseau internet, ce qui permet à l'administrateur une consultation et une gestion à distance de ces informations d'erreur.

Ainsi, on obtient un système comportant au moins un objet connecté destiné à être partagé par plusieurs utilisateurs et destiné à être déposé dans au moins un habitacle, ce qui permet à l'administrateur du système de suivre à distance la présence ou l'absence de chaque objet, l'état ouvert ou fermé et des paramètres physique de chaque habitacle.

Comme toute la gestion du contrôle d'accès est effectuée via un serveur informatique, il ne nécessite pas une grande modification sur des habitacles existants.

L'utilisation d'un lecteur compatible avec la technologie « Bluetooth SMART » et de moyens de communication compatibles avec la technologie telle que LoRa ou SigFOX permet avantageusement d'obtenir plus de liberté sur le lieu d'installation du coffre-fort et le champ d'application d'un tel système.

En outre, grâce à l'utilisation de ces technologies de faible consommation : « Bluetooth SMART », « LoRa » et « SigFox » et l'activation du lecteur et des moyens de communication qu'en cas de nécessité, un tel système consomme très peu et peut avantageusement être alimenté par une batterie. Bien entendu un tel système peut également avoir une alimentation hybride : secteur électrique et batterie. Par ailleurs, en cas de placement d'un habitacle en extérieur, un tel système peut avantageusement utiliser une batterie rechargeable par panneaux photovoltaïques.

L'habitacle peut être différent d'un coffre-fort et son caractère métallique n'est qu'un exemple non limitatif d'un moyen permettant de confiner une liaison sans fil à l'intérieur de l'habitacle. On pourrait par exemple utiliser une cage de Faraday ou un grillage noyé dans les parois de l'habitacle.

## Revendications

1. Procédé de contrôle d'au moins un objet (2) destiné à être partagé par plusieurs utilisateurs et destiné à être déposé dans au moins un habitacle (3) adapté à être dans un état ouvert (OS) ou dans un état fermé (CS), le procédé comprenant :
- une détection de la présence ou de l'absence dudit au moins un objet (2) dans ledit au moins un habitacle (3) à l'état fermé (CS) par l'intermédiaire d'une première liaison sans fil entre l'objet (2) et un lecteur (6) situé dans l'habitacle (3), ladite première liaison sans fil restant confinée dans l'habitacle (3) à l'état fermé (CS), et
- une transmission d'une première information (S1) représentative de la présence ou de l'absence dudit au moins un objet (2) dans ledit habitacle (3) vers au moins un serveur informatique (4) accessible via un site internet (5) destiné à être géré par un administrateur, via un réseau internet et une deuxième liaison entre ledit au moins un habitacle (3) et ledit réseau internet.

2. Procédé selon la revendication 1, comprenant en outre une gestion du contrôle d'accès dudit au moins un habitacle (3) à partir du site internet (5) via le réseau internet et la deuxième liaison.

3. Procédé selon la revendication 2, dans lequel la gestion du contrôle d'accès est en outre effectuée via un troisième canal mis en place entre l'administrateur et l'utilisateur effectif de l'objet (2) partagé.

4. Procédé selon la revendication 3, dans lequel la gestion du contrôle d'accès comprend une génération d'un code d'ouverture de référence (ROC) de l'habitacle (3), une transmission du code de référence (ROC) audit utilisateur effectif par l'administrateur via ledit troisième canal, une saisie d'un code d'ouverture (EOC) sur une interface de saisie (12) couplée audit habitacle (3), une transmission du code d'ouverture saisi (EOC) vers le serveur informatique (4) via ladite deuxième liaison et le réseau internet, une étape de comparaison comportant une comparaison entre le code d'ouverture de référence (ROC) transmis et le code d'ouverture saisi (EOC) reçu par le serveur informatique (4), de façon à obtenir une autorisation ou un refus d'ouverture dudit au moins un habitacle (3) en fonction du résultat de la comparaison et une transmission d'une deuxième information représentative de l'autorisation ou du refus à l'habitacle (3) via le réseau internet et la deuxième liaison.

5. Procédé selon la revendication 4, dans lequel le code d'ouverture de référence (ROC) est choisi dans le groupe formé par : un mot de passe, un code d'authentification Bluetooth, un code d'identification NFC, un code-barres et un code QR.

6. Procédé selon la revendication 2, dans lequel la gestion du contrôle d'accès comprend une reconnaissance d'au moins une caractéristique corporelle de l'utilisateur effectif de l'objet.

7. Procédé selon la revendication 6, dans lequel la gestion du contrôle d'accès comporte un pré-enregistrement d'au moins une caractéristique corporelle de référence (RCC) dans ledit au moins un serveur informatique (4) via le site internet (5), un recueil d'au moins une caractéristique corporelle (CCC) sur une interface de recueil (13) couplée audit habitacle (3), une transmission de ladite au moins une caractéristique corporelle recueillie (CCC) vers ledit au moins un serveur informatique (4) via ladite deuxième liaison et le réseau internet, une étape de comparaison comportant une comparaison entre ladite au moins une caractéristique corporelle de référence (RCC) et ladite au moins une caractéristique corporelle recueillie (CCC) reçue de façon à obtenir une autorisation ou un refus d'ouverture dudit au moins un habitacle (3) en fonction du résultat de la comparaison, et une transmission d'une deuxième information (S2) représentative de l'autorisation ou du refus à l'habitacle via le réseau internet et la deuxième liaison.

8. Procédé selon la revendication 7, dans lequel ladite au moins une caractéristique corporelle de référence (RCC) comprend au moins une caractéristique corporelle choisie dans le groupe formé par : la voix, le visage, une empreinte digitale et une empreinte de l'iris.

9. Procédé selon l'une quelconque des revendications 2 à 8, dans lequel la gestion du contrôle d'accès comprend en outre une détection de l'état ouvert (OS) ou fermé (CS) dudit au moins un habitacle (3) et une transmission d'une troisième information (S3) représentative de l'état ouvert (OS) ou fermé (CS) à l'issue de chaque changement de l'état ouvert (OS) ou fermé (CS) de l'habitacle (3) vers le serveur informatique (4) via la deuxième liaison et le réseau internet.

10. Procédé selon l'une quelconque des revendications précédentes, comprenant en outre une détection d'au moins un paramètre physique dudit au moins un habitacle (3) et une transmission d'une quatrième information (S4) représentative dudit au moins un paramètre physique à l'issue de chaque changement dudit au moins un paramètre physique, vers le serveur informatique (4) via la deuxième liaison et le réseau internet.

11. Procédé selon la revendication 10, dans lequel ledit au moins un paramètre physique est choisi dans le groupe formé par : la température, la position, l'humidité, l'accélération, et, lorsque ledit au moins un habitacle (3) comporte au moins une batterie, le niveau de charge de ladite au moins une batterie.

12. Procédé selon l'une quelconque des revendications précédentes, dans lequel la détection de la présence ou de l'absence d'au moins un objet (2) partagé comprend en outre une prise de photo du contenu interne dudit au moins un habitacle (3) à l'état fermé (CS) et une transmission de la photo vers le serveur informatique (4).

13. Procédé selon l'une quelconque des revendications précédentes, dans lequel la première liaison est basée sur une technologie choisie dans le groupe formé par les technologies : Bluetooth Smart, NFC, IEEE 802.15.1, et RFID, et la deuxième liaison est basée sur une technologie choisie dans le groupe formé par les technologies : LoRa, SigFox, WiFi, et Ethernet.

14. Système, comprenant
au moins un habitacle (3) adapté à être dans un état ouvert (OS) ou dans un état fermé (CS),
au moins un objet (2) destiné à être partagé par plusieurs utilisateurs et destiné à être déposé dans ledit au moins un habitacle (3), et
au moins un serveur informatique (4) accessible via un site internet (5) destiné à être géré par un administrateur,
ledit au moins un habitacle (3) comportant
un lecteur (6) configuré pour établir une première liaison sans fil entre ledit au moins un objet (2) et le lecteur (6), ledit au moins un objet (2) étant équipé d'un module (7) capable de coopérer avec le lecteur (6) via ladite première liaison sans fil, l'habitacle (3) étant configuré de sorte que la première liaison reste confinée dans l'habitacle (3) à l'état fermé (CS),
des moyens de communication (8) configurés pour établir une deuxième liaison entre l'habitacle (3) et un réseau internet,
des moyens de traitement (10) configurés pour détecter la présence ou l'absence de l'objet (2) dans l'habitacle (3) à l'état fermé (CS) par l'intermédiaire de la première liaison, transmettre une première information (S1) représentative de ladite présence ou de ladite absence vers le serveur informatique (4) via le réseau internet et la deuxième liaison.

15. Système selon la revendication 14, dans lequel le serveur (4) est en outre configuré pour gérer le contrôle d'accès dudit au moins un habitacle (3) à partir du site internet (5) via le réseau internet et la deuxième liaison.

16. Système selon la revendication 15, dans lequel le serveur (4) est en outre configuré pour gérer le contrôle d'accès via un troisième canal mis en place entre l'administrateur et l'utilisateur effectif de l'objet (2).

17. Système selon la revendication 16, dans lequel le serveur (4) est configuré pour générer un code d'ouverture de référence (ROC) de l'habitacle (3) et pour transmettre le code d'ouverture de référence (ROC) audit utilisateur effectif via ledit troisième canal, l'habitacle (3) comportant une interface de saisie (12) configurée recevoir une saisie d'un code d'ouverture (EOC), les moyens de traitement (10) étant configurés pour transmettre le code d'ouverture saisi (EOC) vers le serveur informatique (4) via ladite deuxième liaison et le réseau internet, le serveur (4) étant en outre configuré pour effectuer une étape de comparaison comportant une comparaison entre le code d'ouverture de référence (ROC) transmis et le code d'ouverture saisi (EOC) reçu, de façon à obtenir une autorisation ou un refus d'ouverture dudit au moins un habitacle (3) en fonction du résultat de la comparaison et une transmission d'une deuxième information (S2) représentative de l'autorisation ou du refus à l'habitacle (3) via le réseau internet et la deuxième liaison.

18. Système selon la revendication 15, dans lequel le code d'ouverture de référence (ROC) est choisi dans le groupe formé par : un mot de passe, un code d'authentification Bluetooth, un code d'identification NFC, un code-barres et un code QR.

19. Système selon la revendication 15, dans lequel le serveur informatique (4) est en outre configuré pour gérer le contrôle d'accès dudit au moins un habitacle (3) via une reconnaissance d'au moins une caractéristique corporelle d'un utilisateur effectif.

20. Système selon la revendication 19, dans lequel le serveur informatique (4) est configuré pour préenregistrer dans une mémoire au moins une caractéristique corporelle de référence (RCC) via le site internet (5), l'habitacle (3) comportant en outre une interface de recueil (13) configurée pour recueillir ladite au moins une caractéristique corporelle (CCC), les moyens de traitement (10) étant configurés pour transmettre ladite au moins une caractéristique corporelle recueillie (CCC) vers le serveur (4) via ladite deuxième liaison et le réseau internet, et le serveur (4) étant en outre configuré pour effectuer une étape de comparaison comportant une comparaison entre ladite au moins une caractéristique corporelle de référence (RCC) et ladite au moins une caractéristique corporelle recueillie (CCC) reçue de façon à obtenir une autorisation ou un refus d'ouverture dudit au moins un habitacle (3) en fonction du résultat de la comparaison, et une transmission d'une deuxième information (S2) représentative de l'autorisation ou du refus à l'habitacle (3) via le réseau internet et la deuxième liaison.

21. Système selon la revendication 20, dans lequel ladite au moins une caractéristique corporelle de référence (RCC) comprend au moins une caractéristique corporelle choisie dans le groupe formé par : la voix, le visage, une empreinte digitale et une empreinte de l'iris.

22. Système selon l'une quelconque des revendications 15 à 21, dans lequel ledit au moins un habitacle (3) comporte en outre des moyens de détection supplémentaires (9), configurés pour déterminer l'état ouvert (OS) ou fermé (CS) de l'habitacle (3) et les moyens de traitement (10) étant en outre configurés pour transmettre une troisième information (S3) représentative de l'état ouvert (OS) ou fermé (CS) à l'issue de chaque changement de l'état ouvert (OS) ou fermé (CS) de l'habitacle (3) vers le serveur informatique (3) via la deuxième liaison et le réseau internet.

23. Système selon l'une quelconque des revendications 14 à 22, dans lequel ledit au moins un habitacle (3) comporte au moins un capteur (11) configuré pour détecter au moins un paramètre physique de l'habitacle (3) et les moyens de traitement (10) sont en outre configurés pour transmettre une quatrième information (S4) représentative dudit au moins un paramètre physique à l'issue de chaque changement dudit au moins un paramètre physique vers le serveur (4) via la deuxième liaison et le réseau internet.

24. Système selon la revendication 23, dans lequel ledit au moins un paramètre physique est choisi dans le groupe formé par : la température, la position, l'humidité, l'accélération, et, lorsque ledit au moins un habitacle comporte au moins une batterie, le niveau de charge de ladite au moins une batterie.

25. Système selon l'une quelconque des revendications 14 à 24, dans lequel ledit au moins un habitacle (3) comporte un appareil de prise de vue (14) configuré pour prendre au moins une photo du contenu interne dudit au moins un habitacle (3) à l'état fermé (CS) de façon à détecter la présence ou l'absence d'au moins un objet (2) et les moyens de traitement (10) sont configurés pour transmettre au serveur informatique (4) ladite au moins une photo prise.

26. Système selon l'une quelconque des revendications 14 à 25, dans lequel le lecteur (6) est compatible avec une technologie choisie dans le groupe formé par les technologies : Bluetooth Smart, NFC, IEEE 802.15.1, et RFID, et les moyens de communication (8) étant compatibles avec une technologie choisie dans le groupe formé par les technologies : LoRa, SigFox, WiFi, et Ethernet.

27. Système selon l'une quelconque des revendications 14 à 26, dans lequel ledit au moins un habitacle (3) comporte un coffre-fort métallique.

28. Microcontrôleur incorporant les moyens de traitement (10) du système selon l'une quelconque des revendications 14 à 27.

29. Circuit intégré, incorporant le lecteur (6) du système selon l'une quelconque des revendications 14 à 27.

30. Circuit intégré, incorporant les moyens de communication (8) du système selon l'une quelconque des revendications 14 à 27.
